# EUROPEAN PATENT SPECIFICATION

(11) **EP 4 116 073 B1**
(45) Date of publication and mention of the grant of the patent: **11.12.2024**
(21) Application number: 22181533.5
(22) Date of filing: 28.06.2022
(51) Int. Cl.: B29D 30/00

(54) **PRODUCTION METHOD FOR SPONGE-ATTACHED TIRE**
PRODUKTIONSVERFAHREN FÜR EINEN REIFEN MIT BEFESTIGTEM SCHAUMSTOFF
PROCÉDÉ DE FABRICATION D'UN PNEU ÉPONGE

(30) Priority: 08.07.2021 JP 2021113335
(43) Date of publication of application: 11.01.2023
(73) Proprietor: Sumitomo Rubber Industries, Ltd., Kobe-shi, Hyogo-ken 651-0072 (JP)
(72) Inventor: OTANI, Koji, Kobe-shi, 651-0072 (JP)
(74) Representative: Manitz Finsterwald Patent- und Rechtsanwaltspartnerschaft mbB

(56) References cited:
- EP-A1- 2 862 702
- DE-A1- 102017 219 828
- DE-A1- 102019 206 162
- DE-T5- 112019 001 385
- JP-A- 2007 168 243
- JP-A- 2009 160 762

## Description

### BACKGROUND OF THE INVENTION

### Field of the Invention

The present invention relates to a production method for a sponge-attached tire. Specifically, the present invention relates to a production method for a sponge-attached tire having a sound-damping belt-shaped sponge attached to an inner circumferential surface thereof.

### Background Art

A sponge-attached tire having a belt-shaped sponge attached to an inner circumferential surface thereof is known. The sponge-attached tire reduces road noise which is mainly caused by resonant vibration of air (cavity resonance).

Hitherto, sponges have been attached to the inner circumferential surfaces of tires manually by workers. In order to efficiently, highly accurately, and uniformly attach sponges to the inner circumferential surfaces of tires, an attaching device has been developed (for example, Japanese Patent No. 4746421).

In the attaching device disclosed in Japanese Patent No. 4746421, a winding (hereinafter, also referred to as a spiral sponge) formed by winding a sponge material including a band-shaped sponge, in a spiral shape is set in a sponge holding frame as it is. The sponge holding frame is placed inside a tire, and the sponge is attached to the inner circumferential surface of the tire while drawing the sponge material from the spiral sponge.

DE 10 2017 219 828 A1 discloses that a foam strip is placed on a conveyor that conveys the strip to a rotatably mounted reel to wind the strip onto the reel and further presses the strip against the reel so as to compress the foam material. Another production method for a sponge-attached tire is disclosed in EP 2 862 702 A1.

The shape of the sponge is set according to the specification of the tire. The attaching device is required to be capable of attaching sponges having various shapes, to tires.

As the length or the thickness of a sponge to be attached increases, the bulk of a spiral sponge obtained by winding the sponge increases. Depending on the size, the spiral sponge cannot be set in the above-described sponge holding frame in some cases.

The sponge holding frame is set inside the tire through a bead seat hole of the tire. There is a limit to increasing the size of the sponge holding frame.

The sponge is an elastic material. To hold the sponge material as a spiral sponge, it is necessary to restrict the spiral sponge by using some kind of means.

Manual work by a worker is required to produce sponge-attached tires having various specifications. There are still problems to be solved in order to efficiently, highly accurately, and uniformly attach a sponge to the inner circumferential surface of a tire.

The present invention has been made in view of such circumstances, and an object of the present invention is to provide a production method, for a sponge-attached tire, which can contribute to stable production of high-quality sponge-attached tires.

### SUMMARY OF THE INVENTION

A production method for a sponge-attached tire according to claim 1 of the present invention is a production method for a sponge-attached tire having a belt-shaped sponge attached to an inner circumferential surface thereof, the production method including:
(1) a step of mounting a sponge storage cassette including a winding core, to a winding device;
(2) a step of setting an end portion of a sponge material including the sponge, into the winding core;
(3) a step of rotating the winding core to wind the sponge material thereonto in a spiral shape to store the sponge material in the sponge storage cassette;
(4) a step of mounting the sponge storage cassette in which the sponge material has been stored, to an attaching device; and
(5) a step of attaching the sponge to the inner circumferential surface of a tire while pulling out the sponge material from the sponge storage cassette.

In the step of storing the sponge material in the sponge storage cassette, the sponge material passes between the winding core and a pressing member arranged at a position facing the winding core, as the winding core rotates; the sponge material passing between the pressing member and the winding core is compressed by causing the pressing member to come closer to the winding core; and the compressed sponge material is wound onto the winding core.

Preferably, in the production method for the sponge-attached tire, the sponge storage cassette in which the sponge material has been stored is placed inside the tire as it is.

Preferably, in the production method for the sponge-attached tire, the sponge storage cassette includes a shaft portion located inside the winding core and rotatably supporting the winding core, a restriction member located outside the winding core and restricting the sponge material wound on the winding core, and a fixing frame fixing the restriction member to the shaft portion. The winding core is attached to the winding device, and the shaft portion is attached to the attaching device.

According to the present invention, a production method, for a sponge-attached tire, which can contribute to stable production of high-quality sponge-attached tires, is obtained.

### BRIEF DESCRIPTION OF THE DRAWINGS

FIG. 1 is a cross-sectional view showing an example of a sponge-attached tire;
FIG. 2 is a cross-sectional view showing an example of a sponge material that has not been attached;
FIG. 3 is a front view showing an example of a sponge attaching device;
FIG. 4 is a side view of the sponge attaching device;
FIG. 5 is a side view of an attaching tool;
FIG. 6 is a side view of a sponge storage cassette;
FIG. 7 is a cross-sectional view of the sponge storage cassette;
FIG. 8 is a side view showing an example of a sponge winding device;
FIG. 9 is a front view of the sponge winding device;
FIG. 10 is a front view of the sponge winding device;
FIG. 11 is a side view of the sponge winding device;
FIG. 12 is a side view illustrating a winding method for the sponge material;
FIG. 13 is a side view illustrating the winding method for the sponge material;
FIG. 14 is a side view illustrating the winding method for the sponge material;
FIG. 15 is a side view illustrating the winding method for the sponge material;
FIG. 16 is a side view of the sponge storage cassette in which the sponge material is stored;
FIG. 17 is a front view of the sponge attaching device; and
FIG. 18 is a front view of the sponge attaching device.

### DETAILED DESCRIPTION

Hereinafter, the present invention will be described in detail based on preferred embodiments with appropriate reference to the drawings.

### [Sponge-Attached Tire]

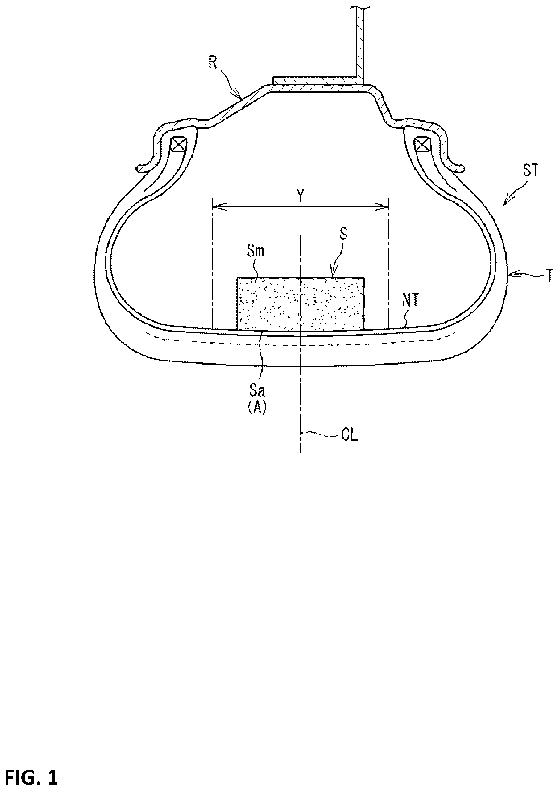

FIG. 1 shows an example of a sponge-attached tire ST obtained by a production method for a sponge-attached tire according to an embodiment of the present invention. FIG. 1 shows a part of a meridian cross-section of the sponge-attached tire ST. In FIG. 1, the sponge-attached tire ST is fitted on a rim R. In FIG. 1, an alternate long and short dash line CL represents an equator plane.

The sponge-attached tire ST includes a tire T and a sponge S.

The tire T includes components such as a tread, sidewalls, beads, a carcass, a belt, and an inner liner. The tire T comes into contact with a road surface at the tread. The inner liner forms the inner circumferential surface of the tire T. These components are general components as components of the tire T, and the description thereof is omitted.

The sponge S is attached to the inner circumferential surface of the tire T. The sponge S of the sponge-attached tire ST is located inward of the tread in the radial direction. The sponge S is located on the equator plane CL. Of the inner circumferential surface of the tire T, a portion on which the tread is located on the outer side is also referred to as a tread inner surface NT. In the sponge-attached tire ST, the sponge S is attached to the tread inner surface NT.

The sponge S has a belt shape. In the sponge-attached tire ST, the sponge S extends in the circumferential direction. A body Sm of the sponge S absorbs and damps the resonance sound energy (vibration energy) generated in the tire inner cavity, by vibration-isolating properties and sound-absorbing properties thereof, to suppress cavity resonance. Accordingly, road noise is reduced.

The body Sm of the sponge S is a sponge-like porous structure, and examples thereof include a sponge itself obtained by foaming a rubber or a synthetic resin and having open cells, and a web-like structure made of animal fibers, plant fibers, or synthetic fibers intertwined and linked together. The above-described "porous structure" also includes a structure having not only open cells but also closed cells.

In the sponge-attached tire ST, synthetic resin sponges such as an ether-based polyurethane sponge, an ester-based polyurethane sponge, and a polyethylene sponge; and rubber sponges such as a chloroprene rubber sponge (CR sponge), an ethylene-propylene rubber sponge (EDPM sponge), and a nitrile rubber sponge (NBR sponge), are suitably used as the body Sm of the sponge S.

In the sponge-attached tire ST, similar to a tire having no sponge S attached thereto, deformation and restoration are repeated. Since the sponge S is attached to the tread inner surface NT, peeling of the sponge S from the tread inner surface NT is prevented.

Although not described in detail, the tire T is obtained, for example, by pressurizing and heating a green tire (tire T in an unvulcanized state, and also referred to as a raw cover) within a cavity formed by a mold and a bladder. In order to take out the tire T from the cavity, a mold release agent such as silicon oil is used. The mold release agent adheres to the inner circumferential surface of the tire T after vulcanization molding. The mold release agent affects the adhesion between the sponge S and the tread inner surface NT.

In the case where the sponge S is attached to the inner circumferential surface of the tire T, it is preferable to form a mold release agent removal region where the mold release agent is removed by means such as buffing or laser irradiation, and attach the sponge S to the mold release agent removal region. Accordingly, the sponge S is reliably adhered to the inner circumferential surface of the tire T.

In the sponge-attached tire ST in FIG. 1, the tread inner surface NT is pre-buffed in the circumferential direction to form a mold release agent removal region Y where the mold release agent is removed, and the sponge S is attached to the mold release agent removal region Y.

Furthermore, in the sponge-attached tire ST, from the viewpoint of reliably adhering the sponge S to the inner circumferential surface of the tire T, one surface of the sponge S is preferably made into an adhesive surface Sa having an adhesive A provided thereon. In this case, a double-sided adhesive tape is suitably used as the adhesive A. The body Sm of the sponge S is adhered to the inner circumferential surface of the tire T via the adhesive A. The sponge S includes the body Sm and the adhesive A provided on one surface of the body Sm. The one surface of the sponge S is the adhesive surface Sa composed of the adhesive A.

### [Sponge Material]

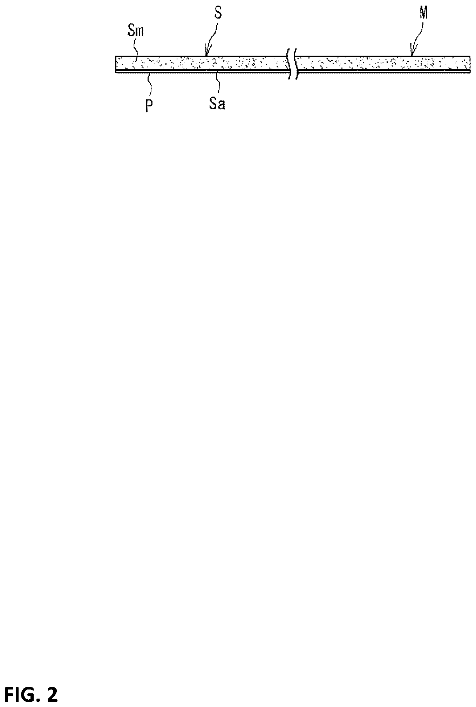

FIG. 2 shows the state of the sponge S that has not been attached to the tire T. From the viewpoint of protecting the adhesive surface Sa which is the one surface of the sponge S, the adhesive surface Sa is covered with a release paper P.

In the present disclosure, the sponge S in which the adhesive surface Sa is covered with the release paper P is a sponge material M. The sponge material M includes the belt-shaped sponge S and the release paper P which covers the adhesive surface Sa which is the one surface of the sponge S. In other words, the sponge material M is composed of the sponge S in which the surface to be attached to the tire T is made into the adhesive surface Sa and the release paper P is provided on the adhesive surface Sa.

The length of the sponge material M is set in consideration of the attachment length per tire T. In the case where the sponge S is attached to the inner circumferential surface of the tire T, a sponge material M whose length is adjusted to the length required for attaching is prepared.

### [Production Method for Sponge-Attached Tire ST]

A production method for the sponge-attached tire ST will be described with the above-described case where the sponge S is attached to the tire T in which the mold release agent removal region Y is formed, as an example.

In the production method, a winding (hereinafter, also referred to as a spiral sponge SP), of the sponge material M, formed by winding the sponge material M in a spiral shape is prepared. The sponge S is attached to the inner circumferential surface of the tire T while drawing the sponge material M from the spiral sponge SP.

### [Sponge Attaching Device]

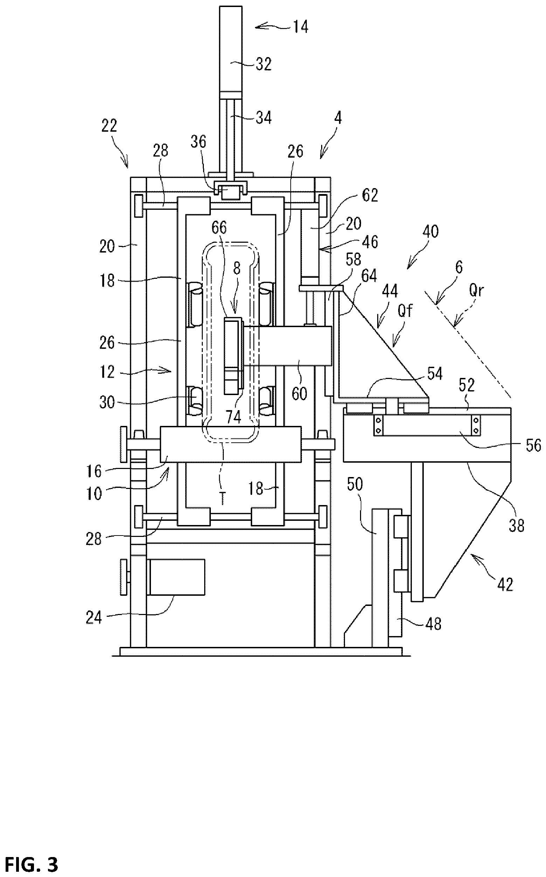

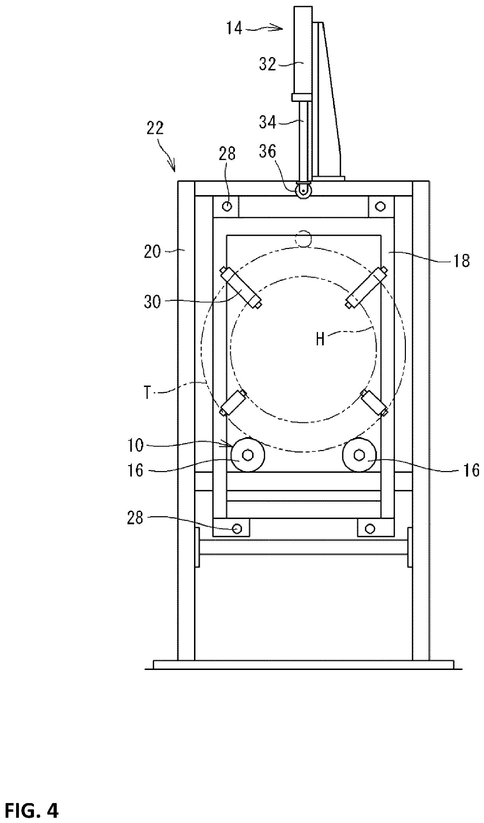

The outline of a sponge attaching device 2 which is used for attaching the sponge S to the tread inner surface NT while drawing the sponge material M from the spiral sponge SP will be described with reference to FIG. 3 and FIG. 4. A production apparatus used in the production method includes the sponge attaching device 2 (hereinafter, attaching device 2).

FIG. 3 is a front view of the attaching device 2. The right-left direction on the surface of the drawing sheet of FIG. 3 corresponds to the axial direction of the tire T. FIG. 4 is a side view of the attaching device 2. The direction perpendicular to the surface of the drawing sheet of FIG. 4 corresponds to the axial direction of the tire T.

The attaching device 2 includes a holding rotary tool 4, a position adjusting tool 6, and an attaching tool 8. The holding rotary tool 4 rotatably holds the tire T in an upright position. The position adjusting tool 6 supports the attaching tool 8 and adjusts the position of the attaching tool 8. The attaching tool 8 attaches the sponge S to the tread inner surface NT of the rotating tire T supported by the holding rotary tool 4.

The holding rotary tool 4 includes a supporting means 10, a positioning means 12, and a pressing means 14. The supporting means 10 supports the tire T. The supporting means 10 includes a pair of support rollers 16 which are arranged at an interval and on which the tire T is placed. The positioning means 12 includes a pair of side supports 18 which are arranged so as to face the side surfaces of the tire T held by the supporting means 10. The pair of side supports 18 sandwich the tire T from both sides. The pressing means 14 presses the tire T held by the supporting means 10, from above.

In the attaching device 2, the supporting means 10, the positioning means 12, and the pressing means 14 are attached to a skeleton-like frame 22 formed by joining left and right side frames 20, which are formed in a rectangular shape using vertical frame pieces and horizontal frame pieces, with a horizontal joint frame piece.

In the attaching device 2, the tire T is placed between the left and right side supports 18, and the tire T is taken out from between the left and right side supports 18.

In the supporting means 10, the pair of support rollers 16 are supported by the side frames 20, respectively, so as to be freely rotatable. A drive motor 24 is coupled to one of the support rollers 16 via a known drive coupling means using a sprocket, an endless continuous string, or the like. The tire T is rotated by driving the drive motor 24.

In the positioning means 12, the pair of side supports 18 each has a support main portion 26 formed in a rectangular shape. The support main portion 26 is supported by a pair of upper and lower guides 28, which extend in the axial direction of the tire T between the left and right side frames 20, so as to be movable in the axial direction. The left and right support main portions 26 are configured so as to be able to come closer to or move away from each other by left and right opening/closing means which are not shown. Accordingly, the position of the tire T placed on the supporting means 10 is adjusted to the position of the tire T when attaching the sponge S.

A plurality of holding rollers 30 are supported on each side support 18 in order to rotatably hold the tire T. The respective holding rollers 30 are attached to the surfaces, facing each other, of the support main portions 26 so as to come into contact with the maximum width position of the tire T.

The pressing means 14 includes a cylinder 32 supported on the upper end of the frame 22 via an attachment fitting. The cylinder 32 includes a rod 34 extending downward, and a pressing roller 36 is pivotally attached to an end of the rod 34 via a roller holder. The tire T is pressed toward the support rollers 16 from above by the extending action of the cylinder 32. The attaching device 2 can reliably rotate the tire T at a predetermined rotation speed without having position misalignment or speed unevenness.

The position adjusting tool 6 can adjust the position of the attaching tool 8 to a height position that allows the attaching tool 8 to be inserted into the tire inner cavity and taken out from the tire inner cavity through a bead seat hole H, by moving up and down a height adjusting stand 38 according to the size of the tire T held by the holding rotary tool 4.

The position adjusting tool 6 includes a supporting tool 40 and a height adjusting tool 42.

The supporting tool 40 supports the attaching tool 8. The supporting tool 40 includes a traversing means 44 and a vertical movement means 46.

The traversing means 44 inserts the attaching tool 8 into the tire inner cavity and takes out the attaching tool 8 from the tire inner cavity through the bead seat hole H of the tire T by moving the attaching tool 8 in the axial direction of the tire T. The vertical movement means 46 moves the attaching tool 8 inserted into the tire inner cavity, in the radial direction of the tire T.

The height adjusting tool 42 supports the supporting tool 40, and adjusts the height position of the attaching tool 8 supported by the supporting tool 40, according to the size of the tire T by moving up and down the supporting tool 40. The height adjusting tool 42 includes the above-described height adjusting stand 38 and a vertical guide portion 48.

The vertical guide portion 48 is provided on a supporting stand 50 extending upward from a base plate of the frame 22, and extends vertically. The height adjusting stand 38 is guided by the vertical guide portion 48, and can move vertically. Although not shown, the height adjusting tool 42 includes a vertical linear drive portion which freely vertically moves the height adjusting stand 38. In the attaching device 2, the vertical linear drive portion has a ball screw mechanism. The vertical linear drive portion includes a screw shaft which is pivotally supported at both ends thereof on the supporting stand 50 and extends in the up-down direction, and a nut portion which is attached to the height adjusting stand 38 and screwed to the screw shaft. A lifting motor attached to the support stand 50 is coupled to an end of the screw shaft.

In the supporting tool 40, the traversing means 44 includes a horizontal guide portion 52, a horizontal movement stand 54, and a horizontal linear drive portion 56. The horizontal guide portion 52 is provided on the height adjusting stand 38. The horizontal movement stand 54 is guided by the horizontal guide portion 52, and can move in the axial direction of the tire T. The horizontal linear drive portion 56 moves the horizontal movement stand 54 between a standby position Qr on a rear side and an advance position Qf on a front side. In the attaching device 2, the horizontal linear drive portion 56 is a rod-less cylinder, and a piston portion which moves between one end and the other end of the horizontal linear drive portion 56 is coupled to the horizontal movement stand 54 via an actuator.

At the standby position Qr, the attaching tool 8 waits outside the tire inner cavity. In the standby state, the tire T is placed into the holding rotary tool 4, the tire T is taken out from the holding rotary tool 4, and the spiral sponge SP is set into the attaching tool 8. At the advance position Qf, the spiral sponge SP is set inside the tire inner cavity such that the width center line of the sponge S is aligned with the equator plane CL of the tire T.

The vertical movement means 46 includes a vertical guide portion 58, a lifting body 60, and a vertical linear drive portion 62. The vertical guide portion 58 is provided on a supporting stand 64 extending upward from the horizontal movement stand 54, and extends vertically. The lifting body 60 is guided by the vertical guide portion 58, and can move vertically. The lifting body 60 extends in the axial direction of the tire T. The attaching tool 8 is held at the front end of the lifting body 60. The vertical linear drive portion 62 moves up and down the lifting body 60. In the attaching device 2, the vertical linear drive portion 62 is a cylinder. The vertical linear drive portion 62 moves the attaching tool 8, which is held at the front end of the lifting body 60, between a height position of insertion into the tire inner cavity and a height position of attachment of the sponge S.

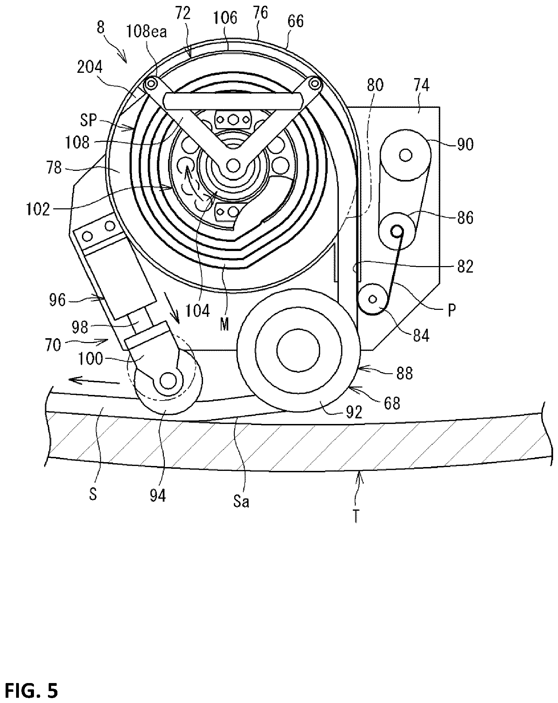

FIG. 5 shows the attaching tool 8. FIG. 5 shows a state where the sponge S is being attached to the inner circumferential surface of the tire T. The direction perpendicular to the surface of the drawing sheet of FIG. 5 corresponds to the axial direction of the tire T.

The attaching tool 8 includes a sponge holding frame 66, a guiding means 68, and an attaching means 70. A sponge storage cassette 72 described later is mounted to the sponge holding frame 66. The sponge material M is stored in the sponge storage cassette 72. The guiding means 68 pulls out the sponge material M from the sponge storage cassette 72, and guides the sponge S to the tread inner surface NT. The attaching means 70 attaches the sponge S to the tread inner surface NT.

The sponge holding frame 66 is attached to the front end of the lifting body 60 via an attachment plate 74. The sponge holding frame 66 has a container-like shape in which an annular peripheral frame 76 for holding the sponge storage cassette 72 is provided at the periphery of a bottom plate 78. A break portion 80 is provided in a part of the annular peripheral frame 76, and a guiding portion 82 which guides the sponge material M is provided in the break portion 80. The sponge material M stored in the sponge storage cassette 72 passes through the guiding portion 82. Although not described in detail, the width of the guiding portion 82 is set such that the sponge material M can smoothly pass through the guiding portion 82.

The guiding means 68 includes a peeling roller 84, a winding roller 86, and a guiding roller 88. The peeling roller 84 and the guiding roller 88 are provided on the lower end side of the guiding portion 82. The winding roller 86 is provided near the guiding portion 82. The peeling roller 84, the winding roller 86, and the guiding roller 88 are supported by the attachment plate 74 so as to be freely rotatable.

The peeling roller 84 peels the release paper P from the sponge material M that has passed through the guiding portion 82. Accordingly, the adhesive surface Sa is exposed, and only the sponge S appears.

The winding roller 86 is adjacent to the peeling roller 84, and winds up the release paper P peeled from the sponge material M by the peeling roller 84. The winding roller 86 is coupled to a drive pulley 90 via a transmission belt. The winding roller 86 rotates when a motor which is not shown is driven and the drive pulley 90 rotates.

The guiding roller 88 guides the sponge S to the tread inner surface NT with the adhesive surface Sa being located on the outer side. A flange 92 which prevents the sponge S from being misaligned is provided at each outer peripheral portion of the guiding roller 88.

The attaching means 70 includes an attaching roller 94. The attaching roller 94 presses and attaches the sponge S guided by the guiding roller 88, to the tread inner surface NT. The attaching roller 94 is supported on the lower end of a rod 98 of a cylinder 96, which is fixed to the attachment plate 74, via a roller holder 100 so as to be freely rotatable. The outer circumferential surface of the attaching roller 94 is composed of a sponge that can easily deform elastically. The attaching roller 94 presses the sponge S against the tread inner surface NT by surface contact.

### [Sponge Storage Cassette]

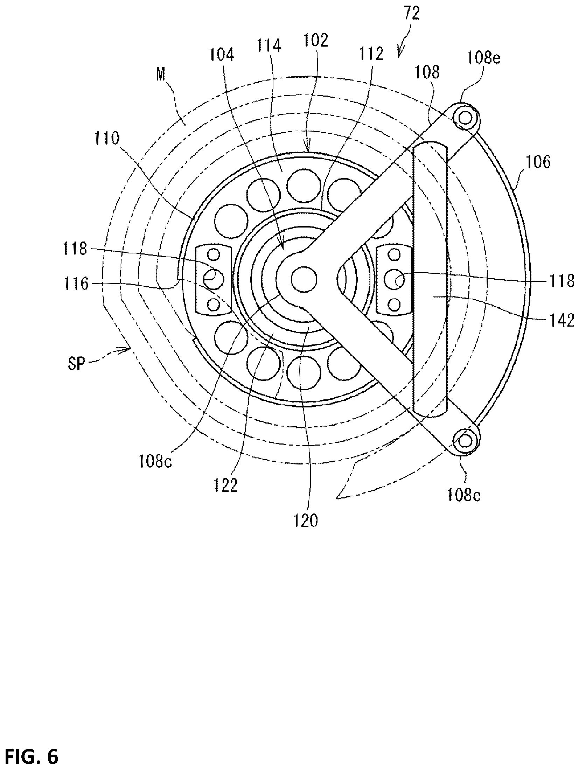

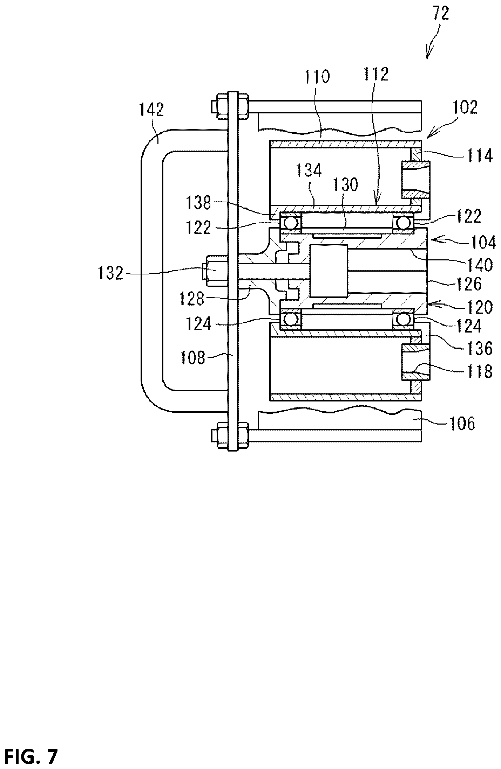

As described above, the sponge storage cassette 72 according to an embodiment of the present invention is mounted to the sponge holding frame 66 of the attaching device 2. The sponge storage cassette 72 will be described with reference to FIG. 6 and FIG. 7. The direction perpendicular to the surface of the drawing sheet of FIG. 6 corresponds to the axial direction of the tire T. The front side of the surface of the drawing sheet of FIG. 6 is the front side of the sponge storage cassette 72. The right-left direction on the surface of the drawing sheet of FIG. 7 corresponds to the axial direction of the tire T. The left side on the surface of the drawing sheet of FIG. 7 is the front side of the sponge storage cassette 72.

The sponge storage cassette 72 stores the sponge material M therein. The sponge storage cassette 72 is used in a winding device described later and the above-described attaching device 2. The sponge storage cassette 72 is also a component of the winding device and a component of the attaching device 2.

The sponge storage cassette 72 includes a winding core 102, a shaft portion 104, a restriction member 106, and a fixing frame 108.

The winding core 102 has a tubular shape. The sponge material M is wound on the outer circumferential surface of the winding core 102. The sponge material M is wound in a spiral shape to form the spiral sponge SP. The sponge material M is stored as the spiral sponge SP in the sponge storage cassette 72.

The winding core 102 includes an outer tube 110, an inner tube 112 which is located inside the outer tube 110, and a support plate 114 which supports the outer tube 110 and the inner tube 112. The outer tube 110 forms the outer circumferential surface of the winding core 102. The inner tube 112 forms the inner circumferential surface of the winding core 102. The support plate 114 has a donut shape. The outer tube 110 is fixed to the outer edge of the support plate 114. The outer tube 110 extends from the outer edge of the support plate 114 toward the front side. The inner tube 112 is fixed to the inner edge of the support plate 114. The inner tube 112 extends from the inner edge of the support plate 114 toward the front side.

In the sponge storage cassette 72, a break portion 116 is formed in a part of the outer tube 110. This break portion is a slit.

The sponge material M is wound on the outer circumferential surface of the winding core 102, and an end portion of the sponge material M is held into the slit 116. Since the sponge material M is stably held to the winding core 102, the sponge material M is smoothly wound up. From this viewpoint, the slit 116 for holding the end portion of the sponge material M thereinto is preferably provided in the outer tube 110.

The support plate 114 is provided with two attachment holes 118 which penetrate the support plate 114. The attachment holes 118 are used for mounting to the winding device described later.

The shaft portion 104 is located inside the winding core 102. The shaft portion 104 rotatably supports the winding core 102. The shaft portion 104 is fitted into the inner tube 112 of the winding core 102.

The shaft portion 104 includes a shaft portion body 120 and a bearing portion 122. The bearing portion 122 is located between the shaft portion body 120 and the winding core 102. The sponge storage cassette 72 is configured such that the winding core 102 rotates about the shaft portion body 120. The bearing portion 122 of the sponge storage cassette 72 includes two bearings 124.

In the sponge storage cassette 72, the shaft portion body 120 of the shaft portion 104 includes a body portion 126 and a lid portion 128. Steps are formed on the outer circumferential surface of the body portion 126, and the two bearings 124 are mounted at these steps. A spacer 130 is arranged between the two bearings 124, so that the two bearings 124 are arranged at a certain interval. The lid portion 128 is fixed to the body portion 126 by a bolt 132, and the two bearings 124 are fixed to the shaft portion body 120.

The inner tube 112 of the above-described winding core 102 includes an inner tube body 134 and a pressing plate 136. The inner tube body 134 includes, at a front-side end portion thereof, a projection portion 138 which projects inward. When the winding core 102 is attached to the shaft portion 104, the projection portion 138 is supported by the front-side bearing 124. The pressing plate 136 is attached to a back-side end portion of the inner tube body 134, and the back-side bearing 124 is supported by the pressing plate 136. Accordingly, the winding core 102 is fixed to the shaft portion 104.

The body portion 126 of the shaft portion body 120 is provided with a fixing hole 140 which extends from the end surface thereof on the back side toward the front side. Although described later, the fixing hole 140 is used for mounting to the above-described attaching device 2.

The restriction member 106 is located outside the winding core 102. As described above, the sponge material M is wound on the winding core 102. The restriction member 106 is located outside the sponge material M wound on the winding core 102.

The sponge material M is an elastic material. The sponge material M wound on the winding core 102 attempts to return to the pre-winding state thereof. However, when the sponge material M attempts to return, the sponge material M comes into contact with the restriction member 106. Accordingly, the restoration of the sponge material M is prevented.

The restriction member 106 restricts the sponge material M wound on the winding core 102. The sponge material M is maintained in a state of being wound on the winding core 102, that is, as the spiral sponge SP. The sponge storage cassette 72 can control the size of the spiral sponge SP. In the sponge storage cassette 72, the size of the spiral sponge SP is appropriately maintained.

The restriction member 106 of the sponge storage cassette 72 is a curved plate. As long as the sponge material M wound on the winding core 102 can be restricted, the restriction member 106 may be composed of, for example, a rod-shaped member which extends in the width direction of the sponge material M.

The fixing frame 108 fixes the restriction member 106 to the shaft portion 104. The restriction member 106 is integrated with the shaft portion 104.

It is sufficient that the fixing frame 108 can fix the restriction member 106 to the shaft portion 104, and the configuration of the fixing frame 108 is not particularly limited. The fixing frame 108 of the sponge storage cassette 72 is composed of an L-shaped plate.

In the sponge storage cassette 72, the fixing frame 108 is attached at a corner portion 108c thereof to the shaft portion 104. The fixing frame 108 is fixed to the body portion 126 by the bolt 132 together with the lid portion 128 of the shaft portion 104. Both end portions 108e of the fixing frame 108 are attached to end portions of the restriction member 106, respectively.

In the sponge storage cassette 72, for ease of carrying the sponge storage cassette 72, a handle 142 is attached to the fixing frame 108.

### [Sponge Winding Device]

As described above, in the production method for the sponge-attached tire ST, the spiral sponge SP is prepared by winding the sponge material M in a spiral shape before the sponge S is attached to the inner circumferential surface of the tire T. A sponge winding device 152 (hereinafter, winding device) for winding up the sponge material M in a spiral shape is used for this preparation. The above-described sponge storage cassette 72 is also used in the winding device 152.

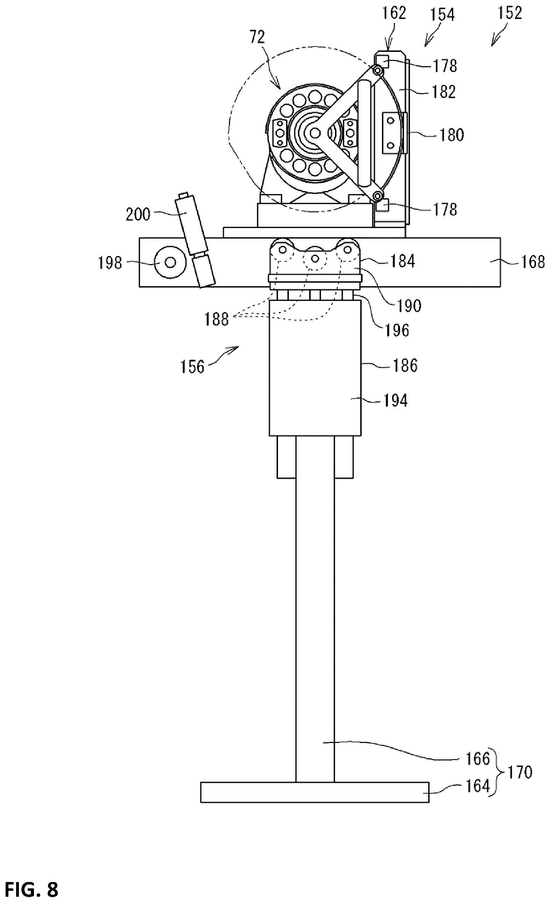

Here, the outline of the sponge winding device 152 according to an embodiment of the present invention will be described with reference to FIG. 8 to FIG. 15. The production apparatus used in the production method for the sponge-attached tire ST includes the winding device 152 in addition to the above-described attaching device 2.

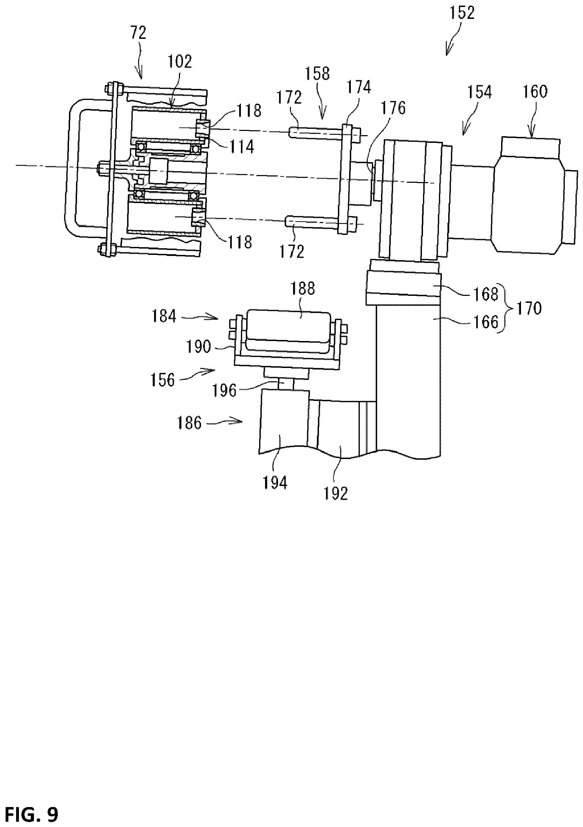

FIG. 8 is a side view of the winding device 152. FIG. 9 is a front view of the winding device 152. The direction perpendicular to the surface of the drawing sheet of FIG. 8 corresponds to the axial direction of the tire T. In FIG. 8, the front side of the surface of the drawing sheet is the front side of the winding device 152. The right-left direction on the surface of the drawing sheet of FIG. 9 corresponds to the axial direction of the tire T. In FIG. 9, the left side on the surface of the drawing sheet is the front side of the winding device 152.

The winding device 152 includes a mounting tool 154 and a compressing tool 156. The sponge storage cassette 72 is mounted to the mounting tool 154. The compressing tool 156 compresses the sponge material M to be stored in the sponge storage cassette 72. The winding device 152 is a device that winds up the sponge material M while compressing the sponge material M.

The mounting tool 154 includes an attachment portion 158, a rotary machine 160, and a restriction portion 162. The attachment portion 158 is supported by the rotary machine 160. The rotary machine 160 and the restriction portion 162 are supported by a supporting stand 168 which is attached to an end of a supporting rod 166 extending upward from a floor plate 164. The floor plate 164, the supporting rod 166, and the supporting stand 168 form a frame 170 of the winding device 152.

The attachment portion 158 is located on the front side of the winding device 152. The attachment portion 158 includes a pair of attachment pins 172. The pair of attachment pins 172 are supported by a holding plate 174. The respective attachment pins 172 extend from the holding plate 174 toward the front side.

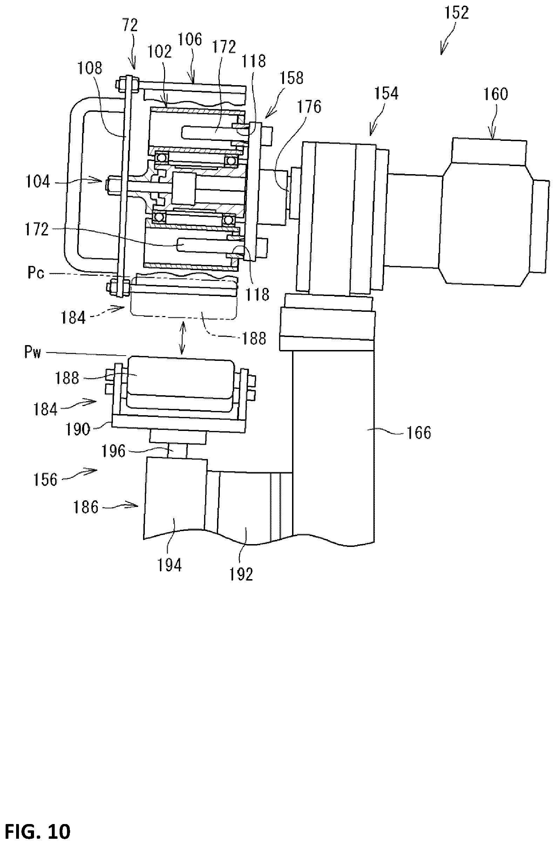

In the winding device 152, the attachment pins 172 in the attachment portion 158 are arranged such that the attachment pins 172 can be passed through the attachment holes 118 which are provided in the support plate 114 of the winding core 102. As shown in FIG. 10, the attachment pins 172 of the mounting tool 154 are passed through the attachment holes 118 of the winding core 102. Accordingly, the winding core 102 of the sponge storage cassette 72 is attached to the attachment portion 158 of the mounting tool 154. The sponge storage cassette 72 is attachable to and detachable from the mounting tool 154.

The rotary machine 160 includes a rotary shaft 176. The above-described attachment portion 158 is attached to a distal end of the rotary shaft 176. When the rotary machine 160 is driven, the attachment portion 158 rotates. The rotary machine 160 rotates the attachment portion 158.

The rotary machine 160 is an air motor. The rotary machine 160 may be, for example, an electric motor.

The restriction portion 162 includes two stoppers 178 and a contact plate 180.

The two stoppers 178 are attached to a holding member 182 which extends upward from the supporting stand 168. The two stoppers 178 extend from the holding member 182 toward the front side. The two stoppers 178 are arranged at an interval in the up-down direction. Similar to the stoppers 178, the contact plate 180 is also attached to the holding member 182 and extends from the holding member 182 toward the front side. The contact plate 180 is located between the two stoppers 178 in the up-down direction.

As described above, in the sponge storage cassette 72, the shaft portion 104 rotatably supports the winding core 102, and the restriction member 106 is integrated with the shaft portion 104 together with the fixing frame 108. In the winding device 152, the restriction member 106 is rotatable relative to the winding core 102.

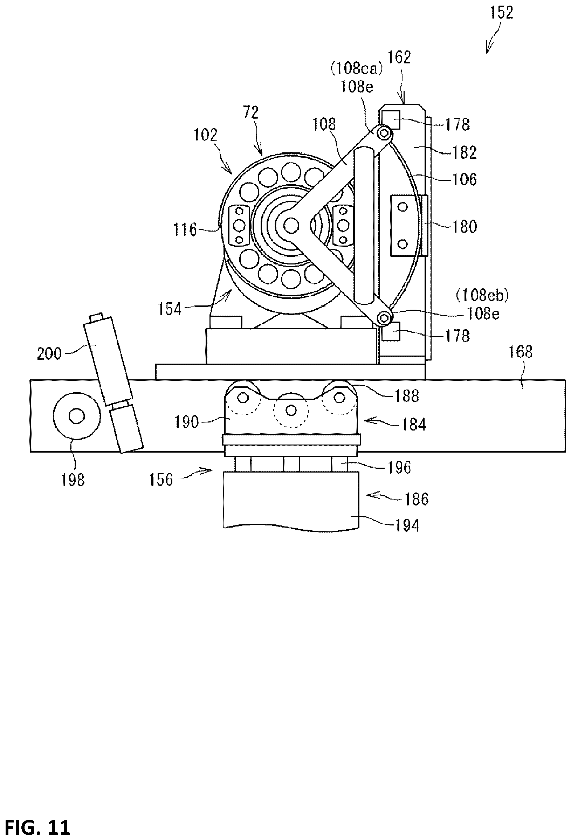

In the winding device 152, as shown in FIG. 11, the two stoppers 178 and the contact plate 180 are arranged so as to surround the restriction member 106 of the sponge storage cassette 72. The upper stopper 178 is arranged so as to come into contact with an end portion (hereinafter, first end portion 108ea) of the fixing frame 108 which is attached to an upper end portion of the restriction member 106. The upper stopper 178 prevents counterclockwise rotation of the restriction member 106. The lower stopper 178 is arranged so as to come into contact with an end portion (hereinafter, second end portion 108eb) of the fixing frame 108 which is attached to a lower end portion of the restriction member 106. The lower stopper 178 prevents clockwise rotation of the restriction member 106. The contact plate 180 comes into contact with the restriction member 106 from the outside between the upper stopper 178 and the lower stopper 178.

The two stoppers 178 and the contact plate 180, that is, the restriction portion 162, restricts the restriction member 106. In other words, the restriction portion 162 restricts the movement of the sponge storage cassette 72 attached to the attachment portion 158. Accordingly, the restriction member 106 is prevented from rotating relative to the winding core 102.

The compressing tool 156 is located on the front side of the supporting rod 166 and supported by the supporting rod 166. The compressing tool 156 includes a pressing member 184 and a supporting means 186.

The pressing member 184 is located below the sponge storage cassette 72. The pressing member 184 is arranged so as to face the winding core 102 of the sponge storage cassette 72. The pressing member 184 includes a roller 188 and a supporting holder 190 which rotatably supports the roller 188. In the winding device 152, the number of rollers 188 provided in the pressing member 184 is three. It is sufficient that at least one roller 188 is provided in the pressing member 184, and the number of rollers 188 provided in the pressing member 184 is not particularly limited.

The supporting means 186 includes a cylinder 194 which is attached to the supporting rod 166 via a coupling member 192. The supporting holder 190 of the above-described pressing member 184 is attached to a rod 196 of the cylinder 194.

In the winding device 152, the pressing member 184 comes closer to the winding core 102 by the extending action of the cylinder 194. Although described later, accordingly, the rollers 188 of the pressing member 184 are pressed against the sponge material M. In the winding device 152, the pressing member 184 moves away from the winding core 102 by the retraction action of the cylinder 194. As shown in FIG. 10, the pressing member 184 moves between a standby position Pw and a contact position Pc. The supporting means 186 supports the pressing member 184 such that the position of the pressing member 184 relative to the winding core 102 can be changed.

In the winding device 152, the cylinder 194 is an air cylinder. The cylinder 194 may be, for example, a hydraulic cylinder.

Next, a winding method for the sponge material M according to an embodiment of the present invention will be described on the basis of the operation of the winding device 152. The winding method is a part of the production method for the sponge-attached tire ST.

The winding method includes:
(1) a step of mounting the sponge storage cassette 72 to the winding device 152 (hereinafter, mounting step);
(2) a step of setting an end portion of the sponge material M into the winding core 102 (hereinafter, setting step); and
(3) a step of rotating the winding core 102 to wind up the sponge material M onto the winding core 102 (hereinafter, winding step).

The mounting step is also referred to as a first mounting step in the production method for the sponge-attached tire ST.

In the mounting step, as shown in FIG. 11, the sponge storage cassette 72 is mounted to the winding device 152. The winding core 102 is attached to the attachment portion 158, and the restriction member 106 is restricted by the restriction portion 162. Accordingly, the sponge storage cassette 72 is fixed to the mounting tool 154.

Since the sponge storage cassette 72 is attachable to and detachable from the mounting tool 154, the sponge storage cassette 72 can also be easily detached from the mounting tool 154.

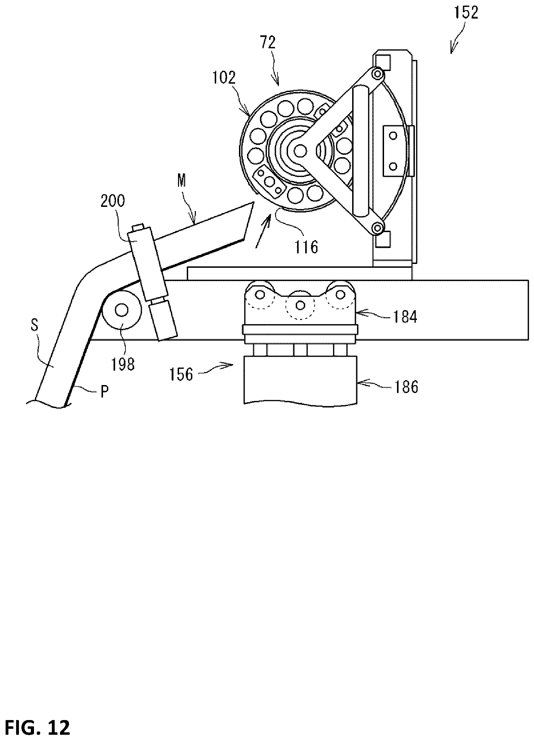

In the setting step, the sponge material M is introduced into the winding device 152. As shown in FIG. 12, the sponge material M passes over an introduction roller 198. The sponge material M further passes between two guiding rollers 200. Accordingly, an end portion of the sponge S is placed near the winding core 102. In this introduction, the sponge material M is introduced into the winding device 152 with the sponge S being located on the upper side (in other words, with the release paper P being located on the lower side). After the introduction, an end portion of the sponge material M is held into the slit 116 of the winding core 102. The end portion of the sponge material M is set into the winding core 102, and the sponge material M is held to the winding core 102.

The size of the slit 116 is set to a size that allows the sponge material M to pass through the slit 116 when the sponge S of the sponge material M is lightly compressed. In the attaching device 2, the end portion of the sponge material M is pulled out from the slit 116. The size of the slit 116 is determined as appropriate in consideration of the ease of inserting and pulling out the end potion of the sponge S.

After the end portion of the sponge material M is set into the winding core 102, the winding step is started.

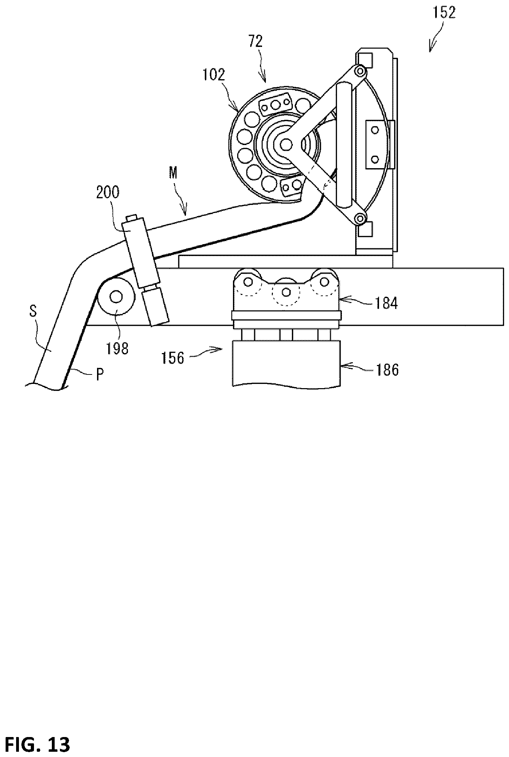

In the winding step, the winding core 102 is rotated, and the sponge material M is placed between the winding core 102 and the pressing member 184 as shown in FIG. 13. The rotary machine 160 is driven, and the attachment portion 158 is rotated. Since the winding core 102 is attached to the attachment portion 158, the winding core 102 rotates when the rotary machine 160 is driven. Accordingly, the sponge material M passes between the winding core 102 and the pressing member 184.

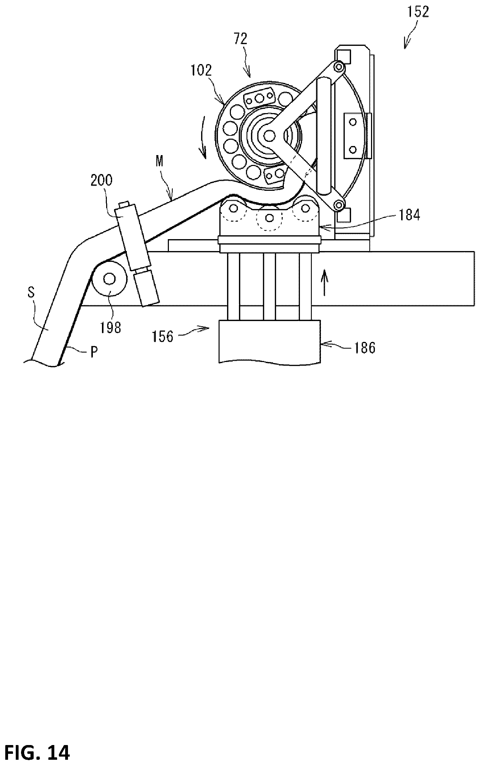

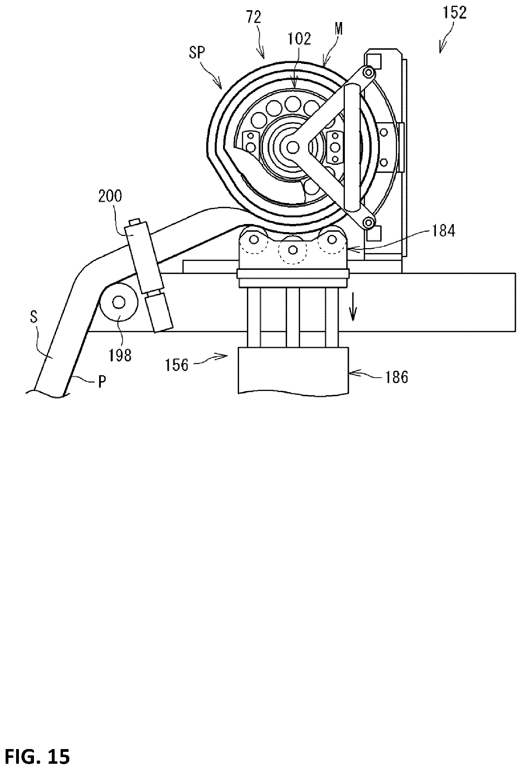

In the winding step, after the rotary machine 160 is driven and winding of the sponge material M is started, the supporting means 186 is driven. The supporting means 186 causes the pressing member 184 located at the standby position Pw to come closer to the winding core 102. The pressing member 184 arrives at the contact position Pc, and presses the sponge material M located between the pressing member 184 and the winding core 102, toward the winding core 102 as shown in FIG. 14. Accordingly, the sponge material M is compressed. In the winding device 152, the sponge material M passing between the pressing member 184 and the winding core 102 is compressed by the supporting means 186 causing the pressing member 184 to come closer to the winding core 102. Therefore, as shown in FIG. 15, the compressed sponge material M is wound on the winding core 102.

The winding step is completed when the entirety of the sponge material M is wound on the winding core 102. The completion of the winding step means that storage of the sponge material M in the sponge storage cassette 72 is completed. The winding step is also a step of rotating the winding core 102 to wind the sponge material M thereonto in a spiral shape to store the sponge material M in the sponge storage cassette 72 (hereinafter, storing step).

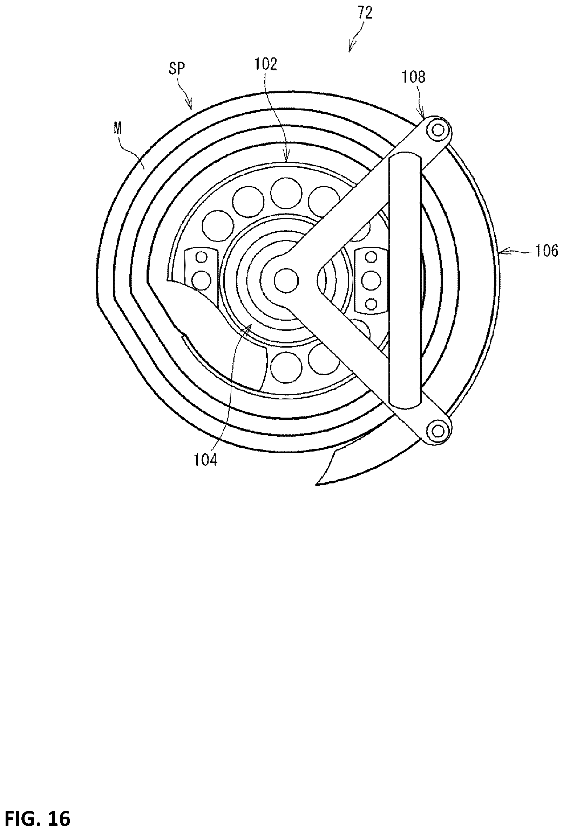

FIG. 16 shows the sponge storage cassette 72 in which the spiral sponge SP obtained by the winding device 152 has been stored. In the winding device 152, the sponge material M is wound on the winding core 102 in layers while the sponge material M is being compressed.

Since the sponge material M located on the inner side is restricted by the sponge material M located on the outer side, the compressed state of the sponge material M located on the inner side is substantially maintained. Since the sponge material M located on the outermost side is restricted by the restriction member 106, in the sponge material M located on the outermost side, the sponge S is restored at least at the portion where the sponge material M is in contact with the restriction member 106. Therefore, the thickness of the sponge material M forming the spiral sponge SP stored in the sponge storage cassette 72 is not uniform. In the spiral sponge SP stored in the sponge storage cassette 72 by the winding device 152, the sponge material M at the portion where the sponge material M is in contact with the restriction member 106 is thicker than the sponge material M located on the inner side of the spiral sponge SP.

After the storage of the sponge material M in the sponge storage cassette 72 is completed, that is, the winding step is completed, the sponge storage cassette 72 is detached from the winding device 152. Then, the sponge S is attached to the tread inner surface NT by using the sponge storage cassette 72 in which the sponge material M has been stored.

In the sponge storage cassette 72, as described above, the restriction member 106 restricts the sponge material M wound on the winding core 102. Therefore, even when the sponge storage cassette 72 is detached from the winding device 152, the sponge material M is maintained in the state of being wound on the winding core 102, that is, as the spiral sponge SP.

Next, a method for attaching the sponge S to the inner circumferential surface (specifically, the tread inner surface NT) of the tire T using the sponge storage cassette 72 will be described. In this attaching method, the above-described attaching device 2 is used. The attaching method is a part of the production method for the sponge-attached tire ST.

The attaching method includes:
(1) a step of mounting the sponge storage cassette 72 in which the sponge material M has been stored, to the attaching device 2 (hereinafter, mounting step); and
(2) a step of attaching the sponge S to the tread inner surface NT while drawing the sponge material M from the spiral sponge SP stored in the sponge storage cassette 72 (hereinafter, attaching step).

The mounting step is also referred to as a second mounting step in the production method for the sponge-attached tire ST.

In the mounting step, the sponge storage cassette 72 in which the sponge material M has been stored is mounted to the attaching device 2. In this mounting, the sponge storage cassette 72 is attached to the sponge holding frame 66 of the attaching device 2.

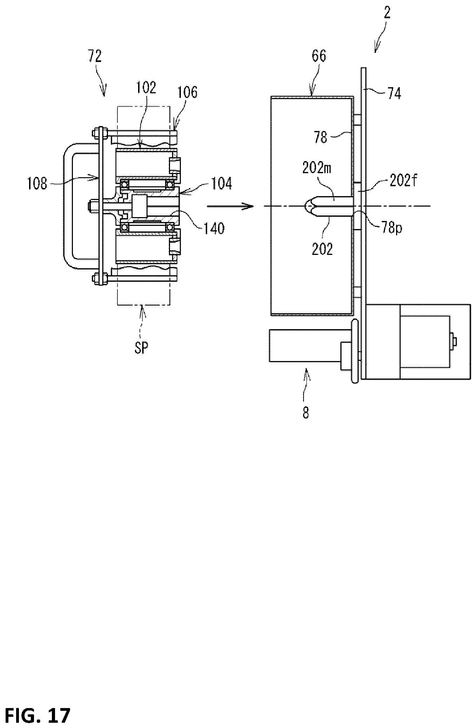

FIG. 17 shows a part of the attaching device 2. FIG. 17 shows the sponge holding frame 66 of the attaching tool 8. The right-left direction on the surface of the drawing sheet of FIG. 17 corresponds to the axial direction of the tire T. In FIG. 17, the right side on the surface of the drawing sheet is the front side of the attaching device 2.

A fixed shaft 202 is provided in the attaching tool 8 of the attaching device 2 so as to extend from the bottom plate 78 of the sponge holding frame 66 toward the front side. The fixed shaft 202 of the attaching device 2 includes a plate-shaped flange portion 202f which is located on the bottom plate 78 side thereof, and a body 202m which extends from the flange portion 202f toward the front side. In the attaching device 2, the fixed shaft 202 is fixed to the attaching tool 8 by interposing the flange portion 202f between the bottom plate 78 and the attachment plate 74 and passing the body 202m through a through hole 78p provided in the bottom plate 78.

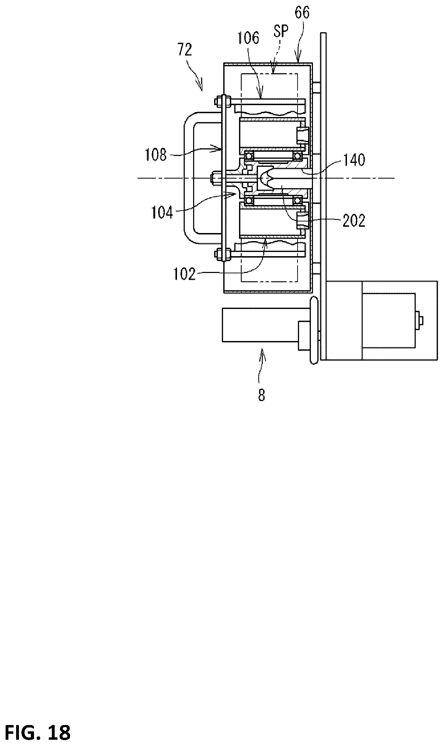

As described above, the fixing hole 140 is provided in the body portion 126 of the shaft portion body 120 included in the shaft portion 104 of the sponge storage cassette 72. In the attaching device 2, the sponge storage cassette 72 is attached to the sponge holding frame 66 by inserting the fixed shaft 202 into the fixing hole 140 as shown in FIG. 18.

In the attaching device 2, a cross-section of the body 202m of the fixed shaft 202 and a cross-section of the fixing hole 140 each have a rectangular shape. Therefore, the sponge storage cassette 72 is held to the sponge holding frame 66 without the shaft portion 104 rotating relative to the fixed shaft 202. In the attaching device 2, the cross-sectional shapes of the body 202m of the fixed shaft 202 and the fixing hole 140 are not particularly limited as long as the attaching device 2 is configured such that the shaft portion 104 does not rotate relative to the fixed shaft 202.

As described above, in the sponge storage cassette 72, the restriction member 106 and the fixing frame 108 are integrated with the shaft portion 104. Therefore, in the attaching device 2, the restriction member 106 does not rotate relative to the fixed shaft 202.

In the attaching device 2, as shown in FIG. 5, a projection portion 204 is provided at a part of the annular peripheral frame 76 of the sponge holding frame 66 so as to project inward. The projection portion 204 is used as a mark for setting the sponge storage cassette 72 into the sponge holding frame 66. In the attaching device 2, the projection portion 204 is placed near the first end portion 108ea of the fixing frame 108. By inserting the fixed shaft 202 of the sponge holding frame 66 into the fixing hole 140 of the sponge storage cassette 72 such that the position of the first end portion 108ea of the fixing frame 108 is aligned with the projection portion 204, the sponge storage cassette 72 is mounted to the sponge holding frame 66 such that the restriction member 106 of the sponge storage cassette 72 does not interfere with the break portion 80 of the sponge holding frame 66.

In the attaching method, after the mounting of the sponge storage cassette 72 to the attaching device 2 is completed, the attaching step is started.

In the attaching step, first, the horizontal movement stand 54 is placed at the standby position Qr (see FIG. 3), and the attaching tool 8 is placed outside the side supports 18. In this standby state, the tire T is placed into the holding rotary tool 4, and is set in the attaching device 2.

After the tire T is set in the attaching device 2, the position of the attaching tool 8 relative to the tire T is adjusted. After the adjustment, the attaching tool 8 is introduced into the tire inner cavity, and attachment of the sponge S to the tread inner surface NT is started.

In the attaching step, as shown in FIG. 5, the release paper P of the sponge material M pulled out from the sponge storage cassette 72 is peeled from the sponge S by the peeling roller 84, and is wound up by the winding roller 86. The sponge S is guided to the tread inner surface NT by the guiding roller 88 with the adhesive surface Sa being located on the outer side. The sponge S is attached to the tread inner surface NT by the attaching roller 94.

The attachment of the sponge S to the tread inner surface NT is performed while rotating the tire T. The shaft portion 104 is fixed to the fixed shaft 202, and the winding core 102 rotates relative to the shaft portion 104, so that the sponge material M is smoothly pulled out from the sponge storage cassette 72 as the tire T rotates.

In the attaching step, the sponge S is attached to the tread inner surface NT while pulling out the sponge material M from the sponge storage cassette 72. The sponge-attached tire ST shown in FIG. 1 is obtained by attaching the entirety of the sponge S stored in the sponge storage cassette 72 to the tread inner surface NT.

In the sponge storage cassette 72, the restriction member 106 restricts the sponge material M wound on the winding core 102, so that the shape of the sponge material M is maintained as the spiral sponge SP.

Moreover, the winding core 102 of the sponge storage cassette 72 is attached to the winding device 152, and the shaft portion 104 of the sponge storage cassette 72 is attached to the attaching device 2. With the sponge storage cassette 72, the spiral sponge SP prepared by the winding device 152 can be supplied to the attaching device 2 as it is. In other words, the sponge storage cassette 72 in which the sponge material M has been stored is placed inside the tire T as it is.

In the winding device 152 and the winding method using the sponge storage cassette 72, the compressed sponge material M is wound onto the winding core 102. Therefore, even when the sponge material M is thick, or even when the sponge material M is long, the sponge material M can be stored in the sponge storage cassette 72, and the shape of the sponge material M is maintained as the spiral sponge SP. Even when the thick sponge material M is stored in the sponge storage cassette 72, or even when the long sponge material M is stored in the sponge storage cassette 72, the size of the sponge storage cassette 72 which is mounted to the sponge holding frame 66 of the attaching device 2 does not change.

The same effect can be obtained not only for the sponge S whose cross-section has a rectangular shape but also for the sponge S whose cross-section has a shape such as a trapezoidal shape, a triangular shape, a semicircular shape, or a bridge girder shape.

With the production method for the sponge-attached tire using the sponge storage cassette 72 and the winding device 152, it is possible to produce sponge-attached tires ST having various specifications. The winding device 152 and the attaching device 2 are responsible for most of the work from the winding of the sponge material M to the attachment of the sponge S, so that the production method allows the sponge S to be efficiently, highly accurately, and uniformly attached to the inner circumferential surface of the tire T.

The sponge storage cassette 72, the sponge winding device 152, the sponge winding method, and the production method for the sponge-attached tire can contribute to stable production of high-quality sponge-attached tires ST.

In the case of winding up the sponge material M by using the sponge storage cassette 72, the sponge material M is wound onto the winding core 102 with the sponge S being located on the winding core 102 side. The release paper P presses the sponge S from the outside, so that the restoration of the sponge S is further suppressed. In the production method, the sponge material M is wound up in a state where the sponge material M is sufficiently compressed. The sponge storage cassette 72 has a high storage capacity for the sponge material M.

With the production method for the sponge-attached tire ST using the sponge storage cassette 72 and the winding device 152, it is possible to produce sponge-attached tires ST having various specifications.

From this viewpoint, in the production method, the sponge material M is preferably wound onto the winding core 102 with the sponge S being located on the winding core 102 side.

As described above, in the winding device 152, the supporting means 186 includes the cylinder 194, and the pressing member 184 is attached to the rod 196 of the cylinder 194.

The spiral sponge SP is formed by winding the sponge material M onto the winding core 102, and the thickness of the spiral sponge SP increases as the number of turns of the sponge material M increases.

Therefore, the force acting on the spiral sponge SP located between the winding core 102 and the pressing member 184 is increased. When an excessive force acts on the sponge material M, damage such as tearing may occur in the sponge S.

However, in the winding device 152, when the thickness of the spiral sponge SP increases and the pressure in the cylinder 194 reaches a certain value, the pressure is reduced. In the winding device 152, the pressure in the cylinder 194 is maintained such that the pressure does not become a certain level or higher. As the pressure is reduced, the cylinder 194 retracts, so that the pressing member 184 is moved away from the winding core 102. In the winding device 152, the position of the pressing member 184 relative to the winding core 102 varies according to the thickness of the sponge material M located between the pressing member 184 and the winding core 102.

In the winding device 152, the force acting on the sponge material M located between the pressing member 184 and the winding core 102 is appropriately maintained such that an excessive force does not act on this sponge material M. The winding device 152 can wind up the sponge material M without causing damage such as tearing in the sponge S.

As described above, in the winding device 152, the supporting means 186 includes the cylinder 194. The pressure in the cylinder 194 is adjusted as appropriate in consideration of the material and the shape of the sponge S, etc. In the winding device 152, the pressure in the cylinder 194 is not particularly limited as long as the sponge material M can be wound up without causing damage in the sponge S. The pressure in the cylinder 194 is set, for example, in a range of not less than 0.1 MPa and not greater than 10 MPa.

As described above, in the winding device 152, the sponge material M is wound up by rotating the winding core 102 by the rotary machine 160. At this time, the pressing member 184 is pressed against the sponge material M. In the winding device 152, the sponge material M is wound up onto the winding core 102 while being stretched. Accordingly, the sponge material M becomes thinner, so that the sponge material M can be densely wound on the winding core 102. This increases the storage capacity of the sponge storage cassette 72 for the sponge material M. As the torque of the rotary machine 160 is increased, the storage capacity for the sponge material M is improved.

The torque of the rotary machine 160 affects the tension in the sponge material M. If the tension in the sponge material M is excessively high, damage such as tearing may occur in the sponge S.

In the winding device 152, the torque of the rotary machine 160 is adjusted as appropriate also in consideration of the strength of the sponge S, etc., such that damage does not occur in the sponge S.

The winding device 152 can effectively increase the storage capacity of the sponge storage cassette 72 for the sponge material M. The winding device 152 allows sponge materials M having various shapes and sizes to be stored in the sponge storage cassette 72. In other words, it is not necessary to prepare the sponge storage cassette 72 according to the shape and the size of the sponge material M to be stored therein.

With the production method for a sponge-attached tire using the sponge storage cassette 72 and the winding device 152, it is possible to produce sponge-attached tires ST having various specifications.

As described above, according to the present invention, a production method, for a sponge-attached tire, which can contribute to stable production of high-quality sponge-attached tires is obtained.

The above-described production method for a sponge-attached tire can be applied to production of various sponge-attached tires.

## Claims

1. A production method for a sponge-attached tire (ST) having a belt-shaped sponge (S) attached to an inner circumferential surface thereof, the production method comprising:
a step of mounting a sponge storage cassette (72) including a winding core (102), to a winding device (152);
a step of setting an end portion of a sponge material (M) including the sponge (S), into the winding core (102);
a step of rotating the winding core (102) to wind the sponge material (M) thereonto in a spiral shape to store the sponge material (M) in the sponge storage cassette (72);
a step of mounting the sponge storage cassette (72) in which the sponge material (M) has been stored, to an attaching device (2); and
a step of attaching the sponge (S) to the inner circumferential surface of a tire (T) while pulling out the sponge material (M) from the sponge storage cassette (72), wherein
in the step of storing the sponge material (M) in the sponge storage cassette (72),
the sponge material (M) passes between the winding core (102) and a pressing member (184) arranged at a position facing the winding core (102), as the winding core (102) rotates,
the sponge material (M) passing between the pressing member (184) and the winding core (102) is compressed by causing the pressing member (184) to come closer to the winding core (102), and
the compressed sponge material (M) is wound onto the winding core (102).

2. The production method for the sponge-attached tire (ST) according to claim 1, wherein the sponge storage cassette (72) in which the sponge material (M) has been stored is placed inside the tire (T) as it is.

3. The production method for the sponge-attached tire (ST) according to claim 1 or 2, wherein
the sponge storage cassette (72) includes
a shaft portion (104) located inside the winding core (102) and rotatably supporting the winding core (102),
a restriction member (106) located outside the winding core (102) and restricting the sponge material (M) wound on the winding core (102), and
a fixing frame (108) fixing the restriction member (106) to the shaft portion (104), and
the winding core (102) is attached to the winding device (152), and the shaft portion (104) is attached to the attaching device (2).

## Patentansprüche

1. Produktionsverfahren für einen Reifen mit befestigtem Schaumstoff (ST), der einen gürtelförmigen Schaumstoff (S) aufweist, der an einer Innenumfangsfläche desselben angebracht ist, wobei das Produktionsverfahren umfasst:
einen Schritt eines Montierens einer Schaumstoffaufbewahrungskassette (72), die einen Wickelkern (102) enthält, an einer Wickelvorrichtung (152);
einen Schritt eines Einsetzens eines Endabschnitts eines Schaumstoffmaterials (M), das den Schaumstoff (S) enthält, in den Wickelkern (102);
einen Schritt eines Drehens des Wickelkerns (102), um das Schaumstoffmaterial (M) darauf in einer Spiralform zu wickeln und somit das Schaumstoffmaterial (M) in der Schaumstoffaufbewahrungskassette (72) aufzubewahren;
einen Schritt eines Montierens der Schaumstoffaufbewahrungskassette (72), in der das Schaumstoffmaterial (M) aufbewahrt worden ist, an einer Befestigungsvorrichtung (2); und
einen Schritt eines Befestigens des Schaumstoffs (S) an der Innenumfangsfläche eines Reifens (T), während das Schaumstoffmaterial (M) aus der Schaumstoffaufbewahrungskassette (72) herausgezogen wird, wobei
in dem Schritt des Aufbewahrens des Schaumstoffmaterials (M) in der Schaumstoffaufbewahrungskassette (72)
das Schaumstoffmaterial (M) zwischen dem Wickelkern (102) und einem Presselement (184) hindurchgeht, das an einer Position angeordnet ist, die dem Wickelkern (102) zugewandt ist, während sich der Wickelkern (102) dreht,
das Schaumstoffmaterial (M), das zwischen dem Presselement (184) und dem Wickelkern (102) hindurchgeht, komprimiert wird, indem bewirkt wird, dass das Presselement (184) sich dem Wickelkern (102) annähert, und
das komprimierte Schaumstoffmaterial (M) auf den Wickelkern (102) gewickelt wird.

2. Produktionsverfahren für den Reifen mit befestigtem Schaumstoff (ST) nach Anspruch 1, wobei die Schaumstoffaufbewahrungskassette (72), in der das Schaumstoffmaterial (M) aufbewahrt worden ist, wie sie ist im Inneren des Reifens (T) angeordnet wird.

3. Produktionsverfahren für den Reifen mit befestigtem Schaumstoff (ST) nach Anspruch 1 oder 2, wobei
die Schaumstoffaufbewahrungskassette (72) umfasst
einen Wellenabschnitt (104), der im Inneren des Wickelkerns (102) angeordnet ist und den Wickelkern (102) drehbar lagert,
ein Beschränkungselement (106), das außerhalb des Wickelkerns (102) angeordnet ist und das auf den Wickelkern (102) gewickelte Schaumstoffmaterial (M) beschränkt, und
einen Fixierungsrahmen (108), der das Beschränkungselement (106) an dem Wellenabschnitt (104) fixiert, und
der Wickelkern (102) an der Wickelvorrichtung (152) befestigt wird, und der Wellenabschnitt (104) an der Befestigungsvorrichtung (2) befestigt wird.

## Revendications

1. Procédé de production pour un pneumatique à éponge attachée (ST) ayant une éponge (S) en forme de ceinture attachée à une surface circonférentielle intérieure de celui-ci, le procédé de production comprenant :
une étape consistant à monter une cassette de stockage d'éponge (72) incluant un noyau d'enroulement (102), sur un dispositif d'enroulement (152) ;
une étape consistant à mettre une portion d'extrémité d'un matériau spongieux (M) incluant l'éponge (S) jusque dans le noyau d'enroulement (102) ;
une étape consistant à mettre en rotation le noyau d'enroulement (102) pour enrouler le matériau spongieux (M) sur celui-ci dans une forme de spirale pour stocker le matériau spongieux (M) dans la cassette de stockage d'éponge (72) ;
une étape consistant à monter la cassette de stockage d'éponge (72) dans laquelle le matériau spongieux (M) a été stocké, sur un dispositif d'attache (2) ; et
une étape consistant à attacher l'éponge (S) sur la surface circonférentielle intérieure d'un pneumatique (T) tout en tirant le matériau spongieux (M) hors de la cassette de stockage d'éponge (72), dans lequel dans l'étape de stockage du matériau spongieux (M) dans la cassette de stockage d'éponge (72),
le matériau spongieux (M) passe entre le noyau d'enroulement (102) et un élément de pressage (184) agencé à une position faisant face au noyau d'enroulement (102), lorsque le noyau d'enroulement (102) est en rotation,
le matériau spongieux (M) passant à travers l'élément de pressage (184) et le noyau d'enroulement (102) est comprimé en amenant l'élément de pressage (184) à se rapprocher du noyau d'enroulement (102), et
le matériau spongieux comprimé (M) est enroulé sur le noyau d'enroulement (102).

2. Procédé de production pour le pneumatique à éponge attachée (ST) selon la revendication 1, dans lequel la cassette de stockage d'éponge (72) dans laquelle le matériau spongieux (M) a été stocké est placée en l'état à l'intérieur du pneumatique (T).

3. Procédé de production pour le pneumatique à éponge attachée (ST) selon la revendication 1 ou 2, dans lequel
la cassette de stockage d'éponge (72) inclut
une portion formant tige (104) située à l'intérieur du noyau d'enroulement (102) et supportant en rotation le noyau d'enroulement (102),
un élément de restriction (106) situé à l'extérieur du noyau d'enroulement (102) et restreignant le matériau spongieux (M) enroulé sur le noyau d'enroulement (102), et
un châssis de fixation (108) fixant l'élément de restriction (106) sur la portion formant tige (104), et
le noyau d'enroulement (102) est attaché au dispositif d'enroulement (152), et la portion formant tige (104) est attachée au dispositif d'attache (2).
